# EUROPEAN PATENT APPLICATION

(11) **EP 2 365 565 A1**
(43) Date of publication of application: **14.09.2011**
(21) Application number: 09830272.2
(22) Date of filing: 26.10.2009
(51) Int. Cl.: H01M 4/525, C01G 49/00, H01M 4/505

(54) **POSITIVE ELECTRODE ACTIVE MATERIAL FOR LITHIUM ION BATTERY, POSITIVE ELECTRODE FOR SECONDARY BATTERY USING THE POSITIVE ELECTRODE ACTIVE MATERIAL, AND LITHIUM ION SECONDARY BATTERY USING THE SECONDARY BATTERY POSITIVE ELECTRODE**

(30) Priority: 05.12.2008 JP 2008310555
(71) Applicant: JX Nippon Mining & Metals Corporation, Chiyoda-ku Tokyo 100-0004 (JP)
(72) Inventor: NAGASE Ryuichi, Kitaibaraki-shi Ibaraki 319-1535 (JP)
(74) Representative: Hoarton, Lloyd Douglas Charles
(86) International application number: PCT/JP2009/068339
(87) International publication number: WO 2010/064504

(57) **Abstract**

Provided is a positive electrode active material for a lithium ion battery, wherein the oil absorption of NMP (N-methylpyrrolidone) measured with a method that is compliant with JIS K5101-13-1 is 30 mL or more and 50 mL or less per 100 g of powder, and wherein [the positive electrode active material] is represented with LiₐFe_{w}NiₓMn_{y}CO_{z}O₂ (1.0 < al (w + x + y + z) < 1.3, 0.8 < w + x + y + z < 1.1) having a spinel structure or a layered structure, and includes at least three or more components among the components of Fe, Ni, Mn, and Co. The present invention relates to a positive electrode active material for a lithium ion battery to be used as a large battery for vehicle installation of hybrid vehicles and the like and for stationary cells of load leveling and the like, and aims to provide a positive electrode active material having superior coating properties while exhibiting necessary performance, a positive electrode for a secondary battery using the foregoing positive electrode active material, and a lithium ion secondary battery using the foregoing secondary battery positive electrode.

## Description

### TECHNICAL FIELD

The present invention relates to a positive electrode active material for a lithium ion battery, and in particular relates to a positive electrode active material for a lithium ion battery which yields favorable functions as a battery and has superior coating properties, a positive electrode for a secondary battery using the foregoing positive electrode active material, and a lithium ion secondary battery using the foregoing positive electrode for a secondary battery.

### BACKGROUND ART

In recent years, there is a rapidly growing demand for a non-aqueous electrolyte lithium secondary battery as a high energy density battery. This lithium secondary battery is configured from three fundamental components; namely, a positive electrode, a negative electrode, and a separator retaining an electrolyte interposed between these electrodes.
As the positive electrode and negative electrode, a slurry obtained by mixing and dispersing active materials, conductive materials, bonding materials and plasticizing agents (where appropriate) in a dispersion medium is used by being supported by a collector such as a metallic foil or a metallic mesh.

A lithium-containing transition metal oxide is generally used as a positive electrode active material of a lithium ion battery. Specifically, lithium cobalt oxide (LiCoO₂), lithium nickel oxide (LiNiO₂), lithium manganese oxide (LiMn₂O₄) or the like is used, and the compounding thereof is being advanced in order to improve the performance (achievement of high capacity, improvement of cycle life, improvement of storage performance, reduction of internal resistance, improvement of charge/discharge properties) and increase the safety (refer to Patent Document 1, Patent Document 2, Patent Document 3, and Patent Document 4).

Nowadays characteristics of large battery usage in demand for vehicle installation or load leveling are different from those of usage for such as mobile phones and personal computers; high capacity and low resistance are in demand in vehicle installation, and high capacity and longer operating life are in demand in load leveling.
In order to develop these characteristics, powder characteristics are obviously important, but as an issue of manufacturing the electrode structure, coating properties are an important factor. Even if prescribed characteristics are obtained in testing of small quantities, if there are problems in the coating properties in mass production, there are cases where the resulting material will not be used.
Nevertheless, as a conventional positive electrode active material of a lithium ion battery, there were no cases that showed interest in the coating properties in order to improve the performance (achievement of high capacity, improvement of cycle life, improvement of storage performance, reduction of internal resistance, improvement of charge/discharge properties) and increase the safety.

As described above, the coating properties of the positive electrode active material are extremely important, and even if the positive electrode active material of the lithium ion battery itself is able to realize the achievement of high capacity, improvement of cycle life, improvement of storage characteristics, reduction of internal resistance, improvement of charge/discharge properties, so as long as the coating properties are inferior, the adhesion of the collector and the positive electrode active material will be insufficient and a gap will be generated, or it may peel during the course of the charge/discharge cycle and cause a gap to be generated, whereby the resistance value will increase and, consequently, it will not be possible to obtain sufficient battery capacity, and there is a problem in that the cycle life of the battery cannot be sufficiently ensured.

As technology related to coating, there is the following Patent Document (refer to Patent Document 5), but it only provides a short description. Specifically, Patent Document 5 primarily introduces, as prior art that prescribes the oil absorption of a positive electrode active material for a lithium ion battery, technology of using a lithium titanium oxide as the positive electrode active material, wherein the oil absorption is 30 g or more and 60 g or less per 100 g, the average particle size is 1 to 50µm, the specific surface area is 0.5 to 10m²/g, and the degree of circularity of the projection image of particles is 0.950 or more.
Patent Document 5 describes the following problems; namely, if the shape of the material becomes uneven, the liquidity will become inferior, and the handling during the mixing with the conductant agent or binding agent upon preparing the electrode will become inferior, and that even mixing will be difficult, and the absorption/retention of the electrolytic solution is insufficient and the coating of the collector will become difficult, and that it is not possible to produce a battery having superior cycle life. Patent Document 5 continues by saying that as a result of shaping the secondary particles into a spherical shape with similar particle size, the handling will become favorable and coating of the collector can be performed favorably, and, as a result of performing oil absorption within a prescribed range, the absorption and retention of the electrolytic solution can be facilitated, and it is thereby possible to produce a battery with superior cycle life.
On the aspect of coating among the coating properties, Patent Document 5 only provides a short description to the effect of shaping the positive electrode active material into a spherical shape (refer to paragraph [0027] of Patent Document 5).
Moreover, in the foregoing case, the oil absorption is noted solely for its contribution to the cycle life, and there is no association between the oil absorption and the coating properties.
[Patent Document 1] Japanese Published Unexamined Application No. H1-29436
[Patent Document 2] Japanese Published Unexamined Application No.H11-307094
[Patent Document 3] Japanese Published Unexamined Application No.2005-285572
[Patent Document 4] Japanese Published Unexamined Application No.2003-59490
[Patent Document 5] Japanese Published Unexamined Application No.2001-192208

### DISCLOSURE OF THE INVENTION

The present invention relates to a positive electrode active material for a lithium ion battery to be used as a large battery for vehicle installation of hybrid vehicles and the like and for stationary cells of load leveling and the like, and an object of the present invention is to provide a positive electrode active material having superior coating properties while developing necessary performance, a positive electrode for a secondary battery using the foregoing positive electrode active material, and a lithium ion secondary battery using the foregoing secondary battery positive electrode.

In order to achieve the foregoing object, the present invention provides the following invention:
1) A positive electrode active material for a lithium ion battery, wherein the oil absorption of NMP (N-methylpyrrolidone) measured with a method that is compliant with JIS K5101-13-1 is 30 mL or more and 50 mL or less per 100 g of powder, and wherein [the positive electrode active material] is represented with LiₐFe_{w}NiₓMn_{y}Co_{z}O₂ (1.0 < a/(w + x + y + z) < 1.3, 0.8 < w + x + y + z < 1.1) having a spinel structure or a layered structure, and includes at least three or more components among the components of Fe, Ni, Mn, and Co.
2) The positive electrode active material for a lithium ion battery according to paragraph 1) above, wherein the average particle size is 4µm or more and 8µm or less, the specific surface area is 1.0m²/g or more and 1.6m²/g or less, and the tap density is 1.5g/cm³ or more and 2.1g/cm³ or less.
3) A positive electrode for a lithium ion secondary battery using the positive electrode active material for a lithium ion battery according to paragraph 1) or paragraph 2) above.
4) A lithium ion secondary battery using the positive electrode for a lithium ion secondary battery according to paragraph 3) above.
5) The lithium ion secondary battery according to paragraph 4) above, wherein the lithium ion battery is used as a large battery for vehicle installation or load leveling.

The positive electrode active material for a lithium ion battery of the present invention yields a superior effect of being able to provide a positive electrode active material having superior coating properties and high battery performance as a result of causing the oil absorption of NMP (N-methylpyrrolidone) measured with a method that is compliant with JIS K5101-13-1 to be 30 mL or more and 50 mL or less per 100 g of powder.

### BEST MODE FOR CARRYING OUT THE INVENTION

The present invention, besides developing the characteristics of a positive electrode active material for a lithium ion battery for use as a large battery, provides a positive electrode active material having superior coating properties and high battery performance by recognizing that the coating properties are an important factor, and by prescribing the relation between the oil absorption that is responsible for the coating properties; in particular, oil absorption of NMP that is often used in coating, and the coating properties, powder characteristics and development of characteristics.
With the positive electrode active material for a lithium ion battery of the present invention, the oil absorption of NMP (N-methylpyrrolidone) measured with a method that is compliant with JIS K5101-13-1 is 30 mL or more and 50 mL or less per 100 g of powder, and [the positive electrode active material] is represented with LiₐFe_{w}NiₓMn_{y}Co_{z}O₂ (1.0 < al (w + x + y + z) < 1.3, 0.8 < w + x + y + z < 1.1) having a spinel structure or a layered structure, and includes at least three or more components among the components of Fe, Ni, Mn, and Co.

The term "coating properties" as used herein is not simply referring to the properties upon applying paste on a collector or the like. It is a given to use paste that can be uniformly and smoothly applied.
What the present invention considers as a particular problem is the following. Specifically, after applying paste uniformly on the collector and smoothing the surface, this is dried to eliminate the solvent in the paste, and further pressed to obtain a positive electrode. However, after the foregoing pressing, there is a problem in that the surface may peel off or become uneven. In other words, the term "coating properties" as used in the present specification means that the adhesiveness and adhesion after the coating are favorable.

In the foregoing case, the adhesion of the collector and the positive electrode active material will be insufficient and a gap will be generated, or it may peel during the course of the discharge cycle and cause a gap to be generated, whereby the resistance value will increase and, consequently, it will not be possible to obtain sufficient battery capacity, and there is a problem in that the cycle life of the battery cannot be sufficiently ensured.
The present inventors focused on the coating properties that become a problem during mass production, and examined in detail the powder characteristics having superior coating properties while satisfying the battery performance. Consequently, the present inventors discovered that it is possible to achieve high capacity, low resistance and superior cycle life by using a lithium-containing transition metal oxide of a prescribed composition in which the oil absorption of NMP (N-methylpyrrolidone) measured with a method that is compliant with JIS K5101-13-1 is within a specified range.

If the oil absorption is less than 30 mL per 100 g of powder, as shown in the following Examples, the coating properties will be insufficient. And, if the oil absorption exceeds 50 mL per 100 g of powder, the coating properties will similarly become inferior. In other words, there is an appropriate level of oil absorption.
Such appropriate level of oil absorption is 30 mL or more and 50 mL or less per 100 g of powder. Oil absorption is a useful means for easily comprehending the characteristics of the material surface which did not appear in the conventional bulk powder characteristics such as the particle size distribution, specific surface area and tap density.

The provided positive electrode material is a lithium-containing transition metal oxide. This is a composite oxide with lithium containing one or more types of transition metals in the periodic table, wherein Mn, Fe, Co, and Ni are favorable as the transition metals. There is no particular need to limit the crystal structure, and it will suffice so as long as the structure enables the insertion and desorption of lithium. Generally, a spinel structure or a layered structure is preferably used.
Moreover, the ratio of Li in relation to all metals desirably exceeds 1.0 and is less than 1.3. I t is difficult to retain a stable crystal structure if the ratio is 1.0 or less, and it is impossible to ensure high capacity if it is not less than 1.3. Specifically, it is necessary to keep the ratio within the range of (1.0 < a/ (w + x + y + z) < 1.3, 0.8 < w + x+y+z< 1.1).

The oil absorption based on JIS K5101-13-1 is measured in the following method. A specific amount of a sample (5g) is placed on a measuring plate such as a glass plate, and the oil (NMP in this case) to be absorbed is gradually added in four or five droplets at a time with a burette. The oil is kneaded into the sample with a palette knife in each case.
The droplets are added until a lump of the oil and sample is formed. Subsequently, one droplet is added at a time and kneading is repeated until the oil and sample are completely kneaded. This process completes when the paste becomes a smooth hardness. It should be soft enough to spread the paste without any cracking or crumbling, and be of a level which lightly adheres to the measuring plate. The time of reaching the end point should be between 20 to 25 minutes. Oil absorption is performed upon converting the drop amount up to the end point per 100 g of the sample.

Moreover, with the powder characteristics, preferably, the average particle size is 4µm or more and 8µm or less, the specific surface area is 1.0m²/g or more and 1.6m²/g or less, and the tap density is 1.5g/cm³ or more and 2.1g/cm³ or less. More preferably, the average particle size is 5µm or more and 7µm or less, the specific surface area is 1.1m²/g or more and 1.5m²/g or less, and the tap density is 1.6g/cm² or more and 2.1g/cm³ or less. If this range is deviated, there are cases where it is difficult to ensure high capacity and the coating properties may be affected.
Specifically, a material having high capacity, low resistance, and superior cycle life can be obtained if the average particle size is 4µm or more and 8µm or less, the specific surface area is 1.0m²/g or more and 1.6m²/g or less, and the tap density is 1.5g/cm³ or more and 2.1g/cm³ or less; that is, if the average particle size, specific surface area, and tap density are set to be within a specified range.
The foregoing positive electrode active material can be used to prepare a positive electrode for a lithium ion battery, and such positive electrode can be used to further produce a lithium ion battery.

### [Examples]

The present invention is now explained with reference to the Examples and Comparative Examples. These Examples are merely illustrative, and the present invention shall in no way be limited thereby. In other words, various modifications and other embodiments based on the technical spirit claimed in the claims shall be included in the present invention as a matter of course.

### (Example 1 and Comparative Example 1)

Carbonate as a precursor was prepared with the wet process using a chloride solution of Ni, Mn, Co and lithium carbonate. This was dried and subject to oxidation treatment to prepare a positive electrode material. The Li, Ni, Mn, Co content in the positive electrode material was measured with ICP in which the result was Ni:Mn:Co = 1:1:1, and it was confirmed that the ratio of Li in relation to all metals (Li/metal ratio) was 1.05. This is a typical positive electrode material.
The conditions of oxidation treatment were changed variously and the positive electrode materials of oil absorption shown in Table 1 were prepared. The oil absorption was measured in accordance with JIS K5101-13-1.
The average particle size was the 50% diameter in the particle size distribution based on laser diffractometry, the specific surface area was the BET value, and the tap density was the density after 200 taps. The results are shown in Table 1.

**[Table 1] (Ni:Mn:Co = 1:1:1)**

| Sample Number | NMP Oil Absorption (mL/100g) | Coating Properties | Average Particle Size (µm) | Specific Surface Area (m²/g) | Tap Density (g/cc) | Initial Discharge Capacity(mAh/g) |
|---|---|---|---|---|---|---|
| 1B | 20 | × | 5.5 | 1.47 | 1.6 | 150 |
| 2B | 20 | × | 3.0 | 1.80 | 1.3 | 140 |
| 3B | 20 | × | 4.5 | 1.87 | 1.4 | 145 |
| 4B | 20 | × | 5.5 | 1.47 | 1.4 | 145 |
| 5A | 30 | ○ | 5.3 | 1.36 | 2.0 | 155 |
| 6A | 40 | ○ | 5.8 | 1.30 | 1.8 | 156 |
| 7A | 40 | ○ | 3.5 | 1.70 | 1.4 | 153 |
| 8A | 40 | ○ | 4.6 | 1.63 | 1.4 | 154 |
| 9A | 40 | ○ | 5.5 | 1.45 | 1.4 | 155 |
| 10A | 50 | ○ | 6.0 | 1.25 | 1.7 | 153 |
| 11B | 60 | × | 6.2 | 1.12 | 1.6 | 148 |

The positive electrode material, acetylene black as the conductive material, and polyvinylidene fluoride as the binder were used and weighed at a ratio of 85:8:7. The binder was dissolved in an organic solvent (N-methylpyrrolidone), a material and a conductive material were mixed to form a slurry, and this was applied on an Al foil and dried and pressed to form a positive electrode.
The coating status after pressing was visually confirmed, and was evaluated with o or × based on the smoothness of the coating surface, ease of coating, peeling of the pressed film, and so on. If the pressed film did not peel and the film surface was smooth, the evaluation of o was given, and if there was any streak in the coating surface or the surface became uneven due to peeling, the evaluation of × was given.
A 2032-type coin cell for evaluation having Li as the counter electrode was prepared, and, upon dissolving 1M-LiPF₆ in an electrolytic solution at EC-DMC (1:1), was used to perform charging and discharging at a charging condition of 4.3V and a discharging condition of 3.0V. The initial discharge capacity was confirmed by confirming the discharge capacity of the charge/discharge at 0.1C. The results are similarly summarized in Table 1.

Sample numbers 5A to 10A shown in Table 1 are Example 1, and sample numbers 1B to 4B and sample number 11 B are Comparative Example 1.
The NMP oil absorption of sample numbers 1 B to 4B was 20 mL/100 g in all cases, and the coating properties were all evaluated as ×. Incidentally, although the NMP oil absorption of sample number 11B was 60 mL/100 g, the coating properties were evaluated as ×. In other words, excessive oil absorption resulted in inferior coating properties. With respect to those in which the average particle size, specific surface area, and tap density were outside the scope prescribed in claim 2 of the present application, the initial discharge capacity tended to be even lower, and the tendency was that the deterioration in the charge/discharge properties added to the inferiority of the coating properties and caused such coating properties to deteriorate even more.

Meanwhile, the NMP oil absorption of sample numbers 5A to 10A (Example 1) within the scope of the present invention was 30 mL/100 g to 50 mL/100 g in all cases, showed favorable coating properties in all cases, and were all evaluated as o. With respect to those in which the average particle size, specific surface area, and tap density which are slightly outside of the scope prescribed in claim 2 of the present application, the initial discharge capacity tended to be slightly low, however, which is consequently nonessential.
Specifically, if the oil absorption is within the scope of the present invention, a slight change in the average particle size, specific surface area, and tap density will not considerably affect the initial discharge capacity. Nevertheless, it goes without saying that the average particle size, specific surface area, and tap density are desirably within the preferred scope of the present invention.

### (Example 2 and Comparative Example 2)

Carbonate as a precursor was prepared with the wet process using a chloride solution of Fe, Ni, Mn, Co and lithium carbonate. This was dried and subsequently subject to oxidation treatment upon variously changing the conditions thereof to prepare the positive electrode material LiₐFe_{w}NiₓMn_{y}CO_{z}O₂ of the composition shown in Table 2. The Li, Fe, Ni, Mn, Co content in the positive electrode material was measured with ICP.
The oil absorption was measured in accordance with JIS K5101-13-1. The average particle size was the 50% diameter in the particle size distribution based on laser diffractometry, the specific surface area was the BET value, and the tap density was the density after 200 taps. The results are shown in Table 2.

**[Table 2]**

| Sample Number | Composition | | NMP Oil Absorption | Coating Properties | Average Particle Size | Specific Surface Area | Tap Density | Initial Discharge Capacity |
|---|---|---|---|---|---|---|---|---|
| | w+ x + y+z | a / (w+x+y+z) | (mL/100 g) | | (µm) | (m²/g) | (g/cc) | (mAh/g) |
| 21B | 0.8 | 0.98 | 20 | × | 4.5 | 1.32 | 1.7 | 125 |
| 22A' | 0.8 | 1.05 | 30 | ○ | 5.5 | 1.28 | 1.7 | 135 |
| 23B | 0.8 | 1.32 | 20 | × | 6.3 | 1.22 | 1.8 | 128 |
| 24A' | 1.0 | 0.98 | 30 | ○ | 5.2 | 1.48 | 1.7 | 150 |
| 25A | 1.0 | 1.05 | 30 | ○ | 5.8 | 1.34 | 1.6 | 156 |
| 26A' | .1.0 | 1.32 | 30 | ○ | 6.5 | 1.29 | 1.5 | 154 |
| 27B | 1.1 | 0.98 | 20 | × | 4.2 | 1.58 | 1.1 | 142 |
| 28A' | 1.1 | 1.05 | 30 | ○ | 4.9 | 1.55 | 1.2 | 148 |
| 29B | 1.1 | 1.32 | 20 | × | 5.8 | 1.48 | 1.2 | 146 |

The positive electrode material, acetylene black as the conductive material, and polyvinylidene fluoride as the binder were used and weighed at a ratio of 85:8:7. The binder was dissolved in an organic solvent (N-methylpyrrolidone), a material and a conductive material were mixed to form a slurry, and this was applied on an Al foil and dried and pressed to form a positive electrode.
The coating status after pressing was visually confirmed, and was evaluated with o/x based on the smoothness of the coating surface, ease of coating, peeling of the pressed film, and so on. If the pressed film did not peel and the film surface was smooth, the evaluation of o was given, and if there was any streak in the coating surface or the surface became uneven due to peeling, the evaluation of × was given.
A 2032-type coin cell for evaluation having Li as the counter electrode was prepared, and, upon dissolving 1M-LiPF₆ in an electrolytic solution at EC-DMC (1:1), was used to perform charging and discharging at a charging condition of 4.3V and a discharging condition of 3.0V. The initial discharge capacity was confirmed by confirming the discharge capacity of the charge/discharge at 0.1C. The results are similarly summarized in Table 2.

Sample numbers 21 B, 23B, 27B, 29B shown in Table 2 are Comparative Example 2, and sample numbers 22A, 24A', 25A, 26A', 28A' are Example 2 covered by the present invention.
With sample number 21 B, a/(w + x + y + z) is slightly small, and the oil absorption is low. Consequently, the coating properties are inferior. Either the composition of metal elements or Li (w + x + y + z, a/ (w + x + y + z)) is outside the scope prescribed in claim 1 of the present application. If the composition is outside the scope of the present invention, the initial discharge capacity tends to be low.
Sample numbers 23B, 27B, 29B also have low oil absorption. Consequently, the coating properties are inferior.

Meanwhile, sample numbers 22A, 24A', 25A, 26A', 28A' all have high oil absorption, and, consequently, the coating properties have improved.
In other words, if the composition of the metal elements and Li (w + x + y + z, a/ (w + x + y + z)) falls outside the scope prescribed in claim 1 of the present application, the initial discharge capacity tends to be low. Those in which the composition of metal elements and Li (w + x + y + z, a/ (w + x + y + z)) is within the scope prescribed in claim 1 of the present application achieved results of a high charge/discharge capacity. Although the average particle size, specific surface area, and tap density are within the scope prescribed in claim 2 of the present application excluding sample number 28A', here, the initial discharge capacity was slightly lower. However, it is evident that this is nonessential. It goes without saying that the average particle size, specific surface area, and tap density are desirably within the scope prescribed in claim 2 of the present application.

Since the compositions are within the scope of claims, the influence based on difference in the metal elements is now explained with reference to the following Examples.

### (Example 3 and Comparative Example 3)

Carbonate as a precursor was prepared with the wet process using a chloride solution of Ni, Mn, Fe and lithium carbonate. This was dried and subject to oxidation treatment to prepare a positive electrode material. The Li, Ni, Mn, Fe content in the positive electrode material was measured with ICP in which the result was Ni:Mn:Fe = 6:3:1, and it was confirmed that the ratio of Li in relation to all metals (Li/metal ratio) was 1.02.
The conditions of oxidation treatment were changed variously and the positive electrode materials of oil absorption shown in Table 3 were prepared.
The oil absorption, average particle size, specific surface area and tap density were measured in the same method as the foregoing Examples, and the results are shown in Table 3.
The method of producing the positive electrode, evaluation of the coating status after pressing, and evaluation of the initial discharge capacity with the coin cell were also performed in the same method as the foregoing Examples, and the results are summarized in Table 3.

**[Table 3] (Ni:Mn:Fe = 6:3:1)**

| Sample Number | NMP Oil Absorption (mL/100g) | Coating Properties | Average Particle Size (µm) | Specific Surface Area (m²/g) | Tap Density (g/cc) | Initial Discharge Capacity(mAh/g) |
|---|---|---|---|---|---|---|
| 30B | 20 | × | 5.8 | 1.50 | 1.6 | 160 |
| 31B | 20 | × | 3.8 | 1.70 | 1.3 | 155 |
| 32B | 20 | × | 5.6 | 1.68 | 1.4 | 153 |
| 33B | 20 | × | 5.5 | 1.48 | 1.4 | 158 |
| 34A | 30 | ○ | 5.5 | 1.32 | 2.0 | 174 |
| 35A | 40 | ○ | 5.8 | 1.38 | 1.8 | 175 |
| 36A' | 40 | ○ | 3.6 | 1.72 | 1.4 | 172 |
| 37A' | 40 | ○ | 4.8 | 1.64 | 1.4 | 173 |
| 38A' | 40 | ○ | 5.5 | 1.48 | 1.4 | 173 |
| 39A | 50 | ○ | 6.0 | 1.25 | 1.7 | 173 |
| 39B | 60 | × | 6.5 | 1.18 | 1.8 | 162 |

Sample numbers 34A, 35A, 36A', 37A', 38A', 39A shown in Table 3 are Example 3 covered by the present invention. Meanwhile, sample numbers 30B, 31B, 32B, 33B, 39B are Comparative Example 3.
The NMP oil absorption of sample numbers 30B, 31 B, 32B, 33B of Comparative Example 3 was 20 mL/100 g in all cases, and the coating properties were all evaluated as x. Incidentally, although the NMP oil absorption of sample number 39B was 60 mL/1100 g, the coating properties were evaluated as ×. In other words, excessive oil absorption resulted in inferior coating properties. With respect to those in which the average particle size, specific surface area, and tap density were outside the scope prescribed in claim 2 of the present application, the initial discharge capacity tended to be even lower, and the tendency was that the deterioration in the discharge properties added to the inferiority of the coating properties and caused such coating properties to deteriorate even more.

Meanwhile, the NMP oil absorption of sample numbers 34A, 35A, 36A', 37A', 38A', 39A within the scope of the present invention was 30 mL/100 g to 50 mL/100 g in all cases, showed favorable coating properties in all cases, and were all evaluated as o. Incidentally, with respect to those in which the average particle size, specific surface area, and tap density which are slightly outside of the scope prescribed in claim 2 of the present application, the initial discharge capacity tended to be slightly low, however, which is consequently nonessential.
Specifically, if the oil absorption is within the scope of the present invention, a slight change in the average particle size, specific surface area, and tap density will not considerably affect the initial discharge capacity. Nevertheless, it goes without saying that the average particle size, specific surface area, and tap density are desirably within the preferred scope of the present invention.

### (Example 4 and Comparative Example 4)

Carbonate as a precursor was prepared with the wet process using a chloride solution of Ni, Co, Fe and lithium carbonate. This was dried and subject to oxidation treatment to prepare a positive electrode material. The Li, Ni, Co, Fe content in the positive electrode material was measured with ICP in which the result was Ni:Co:Fe = 7:2:1, and it was confirmed that the ratio of Li in relation to all metals (Li/metal ratio) was 1.04.
The conditions of oxidation treatment were changed variously and the positive electrode materials of oil absorption shown in Table 4 were prepared. The oil absorption, average particle size, specific surface area and tap density were measured in the same method as the foregoing Examples, and the results are shown in Table 4.
The method of producing the positive electrode, evaluation of the coating status after pressing, and evaluation of the initial discharge capacity with the coin cell were also performed in the same method as the foregoing Examples, and the results are summarized in Table 4.

**[Table 4] (Ni:Co:Fe = 7:2:1)**

| Sample Number | NMP Oil Absorption (mL/100 g) | Coating Properties | Average Particle Size(µm) | Specific Surface Area(m²/g) | Tap Density (g/cc) | Initial Discharge Capacity (mAh/g) |
|---|---|---|---|---|---|---|
| 40B | 20 | × | 6.5 | 1.37 | 1.6 | 170 |
| 41 B | 20 | × | 3.6 | 1.72 | 1.3 | 165 |
| 42B | 20 | × | 5.2 | 1.68 | 1.4 | 158 |
| 43B | 20 | × | 6.6 | 1.42 | 1.4 | 161 |
| 44A | 30 | ○ | 6.2 | 1.28 | 2.0 | 188 |
| 45A | 40 | ○ | 5.8 | 1.30 | 1.9 | 187 |
| 46A' | 40 | ○ | 3.5 | 1.68 | 1.4 | 185 |
| 47A' | 40 | ○ | 5.5 | 1.64 | 1.4 | 184 |
| 48A' | 40 | ○ | 6.3 | 1.33 | 1.4 | 186 |
| 49A | 50 | ○ | 6.2 | 1.22 | 1.7 | 184 |
| 49B | 60 | × | 6.2 | 1.12 | 1.6 | 172 |

Sample numbers 44A, 45A, 46A', 47A', 48A', 49A shown in Table 4 are Example 4 covered by the present invention. Meanwhile, sample numbers 40B-43B, 49B are Comparative Example that deviate from the present invention.
The NMP oil absorption of sample numbers 40B-43B of Comparative Example 4 was 20 mL/100 g in all cases, and the coating properties were all evaluated as x. Incidentally, although the NMP oil absorption of sample number 49B of the Comparative Example was 60 mL/100 g, the coating properties were evaluated as x. In other words, excessive oil absorption resulted in inferior coating properties. With respect to those in which the average particle size, specific surface area, and tap density were outside the scope prescribed in claim 2 of the present application, the initial discharge capacity tended to be even lower, and the tendency was that the deterioration in the charge/discharge properties added to the inferiority of the coating properties and caused such coating properties to deteriorate even more.

Meanwhile, the NMP oil absorption of sample numbers 44A, 45A, 46A', 47A', 48A', 49A of Example 4 within the scope of the present invention was 30 mL/100 g to 50 mL/100 g in all cases, showed favorable coating properties in all cases, and were all evaluated as o. Incidentally, with respect to those in which the average particle size, specific surface area, and tap density which are slightly outside of the scope prescribed in claim 2 of the present application, the initial discharge capacity tended to be slightly low, however, which is consequently nonessential.
Specifically, if the oil absorption is within the scope of the present invention, a slight change in the average particle size, specific surface area, and tap density will not considerably affect the initial discharge capacity. Nevertheless, it goes without saying that the average particle size, specific surface area, and tap density are desirably within the preferred scope of the present invention.

### (Example 5 and Comparative Example 5)

Carbonate as a precursor was prepared with the wet process using a chloride solution of Mn, Co, Fe and lithium carbonate. This was dried and subject to oxidation treatment to prepare a positive electrode material. The Li, Mn, Co, Fe content in the positive electrode material was measured with ICP in which the result was Mn:Co:Fe = 1:8:1, and it was confirmed that the ratio of Li in relation to all metals (Li/metal ratio) was 1.02.
The conditions of oxidation treatment were changed variously and the positive electrode materials of oil absorption shown in Table 5 were prepared.
The oil absorption, average particle size, specific surface area and tap density were measured in the same method as the foregoing Examples, and the results are shown in Table 5.
The method of producing the positive electrode, evaluation of the coating status after pressing, and evaluation of the initial discharge capacity with the coin cell were also performed in the same method as the foregoing Examples, and the results are summarized in Table 5.

**[Table 5] (Mn:Co:Fe = 1:8:1)**

| Sample Number | NMP Oil Absorption (mL/100 g) | Coating Properties | Average Particle Size (µm) | Specific Surface Area (m²/g) | Tap Density (g/cc) | Initial Discharge Capacity (mAh/g) |
|---|---|---|---|---|---|---|
| 50B | 20 | × | 5.5 | 1.27 | 1.7 | 145 |
| 51B | 20 | × | 3.2 | 1.72 | 1.3 | 135 |
| 52B | 20 | × | 5.2 | 1.62 | 1.4 | 140 |
| 53B | 20 | × | 5.6 | 1.37 | 1.4 | 138 |
| 54A | 30 | ○ | 5.8 | 1.28 | 2.0 | 152 |
| 55A | 40 | ○ | 5.2 | 1.40 | 1.8 | 150 |
| 56A' | 40 | ○ | 3.8 | 1.06 | 1.3 | 149 |
| 57A' | 40 | ○ | 4.6 | 1.62 | 1.4 | 151 |
| 58A' | 40 | ○ | 5.5 | 1.45 | 1.4 | 150 |
| 59A' | 50 | ○ | 6.0 | 1.22 | 1.7 | 149 |
| 59B | 60 | × | 6.2 | 1.17 | 1.6 | 142 |

Sample numbers 54A, 55A, 56A', 57A', 58A', 59A' shown in Table 5 are Example 5 covered by the present invention. Meanwhile, sample numbers 50B, 51 B, 52B, 53B, 59B are Comparative Example 5.
The NMP oil absorption of sample numbers 50B, 51 B, 52B, 53B (Comparative Example 5) was 20 mL/100 g in all cases, and the coating properties were all evaluated as ×. Incidentally, although the NMP oil absorption of sample number 59B of Comparative Example [5] was 60 mL/100 g, the coating properties were evaluated as ×. In other words, excessive oil absorption resulted in inferior coating properties. With respect to those in which the average particle size, specific surface area, and tap density were outside the scope prescribed in claim 2 of the present application, the initial discharge capacity tended to be even lower, and the tendency was that the deterioration in the discharge properties added to the inferiority of the coating properties and caused such coating properties to deteriorate even more.

Meanwhile, the NMP oil absorption of sample numbers 54A, 55A, 56A', 57A', 58A', 59A' within the scope of the present invention was 30 mL/100 g to 50 mL/100 g in all cases, showed favorable coating properties in all cases, and were all evaluated as o. Incidentally, with respect to those in which the average particle size, specific surface area, and tap density which are slightly outside of the scope prescribed in claim 2 of the present application, the initial discharge capacity tended to be slightly low, however, which is consequently nonessential.
Specifically, if the oil absorption is within the scope of the present invention, a slight change in the average particle size, specific surface area, and tap density will not considerably affect the initial discharge capacity. Nevertheless, it goes without saying that the average particle size, specific surface area, and tap density are desirably within the preferred scope of the present invention.

### (Example 6 and Comparative Example 6)

Carbonate as a precursor was prepared with the wet process using a chloride solution of Fe, Ni, Mn, Co and lithium carbonate. This was dried and subject to oxidation treatment to prepare a positive electrode material. The Li, Mn, Co, Fe content in the positive electrode material was measured with ICP in which the result was Fe:Ni:Mn:Co = 1:6:1:2, and it was confirmed that the ratio of Li in relation to all metals (Li/metal ratio) was 1.05.
The conditions of oxidation treatment were changed variously and the positive electrode materials of oil absorption shown in Table 6 were prepared.
The oil absorption, average particle size, specific surface area and tap density were measured in the same method as the foregoing Examples, and the results are shown in Table 6.
The method of producing the positive electrode, evaluation of the coating status after pressing, and evaluation of the initial discharge capacity with the coin cell were also performed in the same method as the foregoing Examples, and the results are summarized in Table 6.

**[Table 6] (Fe:Ni:Mn:Co = 1:6:1:2)**

| Sample Number | NMP Oil Absorption (mL/100 g) | Coating Properties | Average Particle Size (µm) | Specific Surface Area (m²/g) | Tap Density (g/cc) | Initial Discharge Capacity (mAh/g) |
|---|---|---|---|---|---|---|
| 60B | 20 | × | 5.2 | 1.32 | 1.7 | 165 |
| 61B | 20 | × | 3.3 | 1.80 | 1.3 | 162 |
| 62B | 20 | × | 4.2 | 1.67 | 1.4 | 160 |
| 63B | 20 | × | 5.1 | 1.52 | 1.4 | 160 |
| 64A | 30 | ○ | 5.3 | 1.32 | 2.0 | 175 |
| 65A | 40 | ○ | 5.8 | 1.40 | 1.8 | 176 |
| 66A' | 40 | ○ | 3.5 | 1.62 | 1.4 | 174 |
| 67A' | 40 | ○ | 4.8 | 1.64 | 1.4 | 174 |
| 68A' | 40 | ○ | 5.8 | 1.52 | 1.4 | 175 |
| 69A | 50 | ○ | 6.2 | 1.18 | 1.7 | 173 |
| 69B | 60 | × | 6.4 | 1.24 | 1.6 | 163 |

Sample numbers 64A, 65A, 66A', 67A', 68A', 69A shown in Table 6 are Example 6 covered by the present invention. Meanwhile, sample numbers 60B, 61 B, 62B, 63B, 69B are Comparative Example 6.
The NMP oil absorption of sample numbers 60B, 61 B, 62B, 63B (Comparative Example 6) was 20 mL/100 g in all cases, and the coating properties were all evaluated as x. Incidentally, although the NMP oil absorption of sample number 69B of Comparative Example 6 was 60 mL/100 g, the coating properties were evaluated as ×. In other words, excessive oil absorption resulted in inferior coating properties. With respect to those in which the average particle size, specific surface area, and tap density were outside the scope prescribed in claim 2 of the present application, the initial discharge capacity tended to be even lower, and the tendency was that the deterioration in the charge/discharge properties added to the inferiority of the coating properties and caused such coating properties to deteriorate even more.

Meanwhile, the NMP oil absorption of sample numbers 64A, 65A, 66A', 67A', 68A', 69A (Example 6) within the scope of the present invention was 30 mL/100 g to 50 mL/100 g in all cases, showed favorable coating properties in all cases, and were all evaluated as o. Incidentally, with respect to those in which the average particle size, specific surface area, and tap density which are slightly outside of the scope prescribed in claim 2 of the present application, the initial discharge capacity tended to be slightly low, however, which is consequently nonessential.
Specifically, if the oil absorption is within the scope of the present invention, a slight change in the average particle size, specific surface area, and tap density will not considerably affect the initial discharge capacity. Nevertheless, it goes without saying that the average particle size, specific surface area, and tap density are desirably within the preferred scope of the present invention.

Based on the foregoing comparison of the Examples and the Comparative Examples, it is evident that the materials shown in the Examples are all superior as a positive electrode active material for a lithium ion battery positive electrode material.
Incidentally, the oil absorption and coating properties were approximately of the same tendency regardless of the composition of the positive electrode material (w, x, y, z), type of conductive material (acetylene black, graphite, etc.), and type of binder (polyvinylidene fluoride, polytetrafluoroethylene, polyacrylamide resin, etc.).

### INDUSTRIAL APPLICABILITY

Since the positive electrode active material for a lithium ion battery of the present invention yields a superior effect of being able to provide a positive electrode active material having superior coating properties and high battery performance as a result of causing the oil absorption of NMP (N-methylpyrrolidone) measured with a method that is compliant with JIS K5101-13-1 to be 30 mL or more and 50 mL or less per 100 g of powder, it is useful as a positive electrode material of a lithium ion battery for use as a large battery in which demands thereof are expected in the future.

## Claims

1. A positive electrode active material for a lithium ion battery, wherein the oil absorption of NMP (N-methylpyrrolidone) measured with a method that is compliant with JIS K5101-13-1 is 30 mL or more and 50 mL or less per 100 g of powder, and wherein [the positive electrode active material] is represented with LiₐFe_{w}NiₓMn_{y}CO_{z}O₂ (1.0<a/(w+x+y+z)<1,3,0.8<w+x+y+z<1,1)having a spinel structure or a layered structure, and includes at least three or more components among the components of Fe, Ni, Mn, and Co.

2. The positive electrode active material for a lithium ion battery according to claim 1, wherein the average particle size is 4µm or more and 8µm or less, the specific surface area is 1.0m²/g or more and 1.6m²/g or less, and the tap density is 1.5g/cm³ or more and 2.1g/cm³ or less.

3. A positive electrode for a lithium ion secondary battery using the positive electrode active material for a lithium ion battery according to claim 1 or claim 2.

4. A lithium ion secondary battery using the positive electrode for a lithium ion secondary battery according to claim 3.

5. The lithium ion secondary battery according to claim 4, wherein the lithium ion battery is used as a large battery for vehicle installation or load leveling.
